(19) **Europäisches Patentamt**
**European Patent Office**
**Office européen des brevets**

(11) **EP 3 406 027 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **16819529.5**

(22) Anmeldetag: **20.12.2016**

(51) Internationale Patentklassifikation (IPC):
**H02P 29/032** *(2016.01)* **H02P 21/12** *(2016.01)*

(52) Gemeinsame Patentklassifikation (CPC):
**H02P 21/12; H02P 29/032;** Y02T 10/72

(86) Internationale Anmeldenummer:
**PCT/EP2016/081840**

(87) Internationale Veröffentlichungsnummer:
**WO 2017/125231 (27.07.2017 Gazette 2017/30)**

(54) **VORRICHTUNG UND VERFAHREN ZUM STEUERN EINER ELEKTRISCHEN MASCHINE**

DEVICE AND METHOD FOR CONTROLLING AN ELECTRIC MACHINE

DISPOSITIF ET PROCÉDÉ DE COMMANDE D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2016 DE 102016200665**

(43) Veröffentlichungstag der Anmeldung:
**28.11.2018 Patentblatt 2018/48**

(73) Patentinhaber: **Robert Bosch GmbH**
**70442 Stuttgart (DE)**

(72) Erfinder:
• **SCHAUT, Stefan**
**71292 Friolzheim (DE)**
• **MALCHOW, Florian**
**70176 Stuttgart (DE)**
• **MAYER-JOHN, Eckart**
**70374 Stuttgart (DE)**

(56) Entgegenhaltungen:
**DE-A1-102010 061 897 DE-A1-102012 218 612**
**US-A1- 2015 123 581**

**EP 3 406 027 B1**

**Beschreibung**

Die vorliegende Erfindung betrifft eine Vorrichtung zum Steuern einer elektrischen Maschine sowie ein Verfahren zum Steuern einer elektrischen Maschine. Die elektrische Maschine kann insbesondere eine elektrische Maschine in einem Motorbetrieb sein.

Stand der Technik

Fehler in einer Leistungselektronik umrichtergespeister elektrischer Maschinen, z.B. von Antrieben, können zur Folge haben, dass ein normaler Betrieb der elektrischen Maschine nicht mehr oder nur noch eingeschränkt möglich ist. Eine mögliche Schwierigkeit besteht darin, dass elektrische Spannungszeiger nur noch eingeschränkt durch die Leistungselektronik der elektrischen Maschine umgesetzt werden können. Dafür kann zum Beispiel ein Ausfall eines Halbleiters oder einer Ansteuerelektronik ursächlich sein.

In der DE 10 2008 042 931 A1 sind ein Verfahren und eine Vorrichtung zur feldorientierten Regelung einer elektrischen Maschine beschrieben.

Die US 2015/123581 A1 beschreibt ein Steuergerät für einen Wechselstrommotor, welches so ausgebildet ist, dass es nach dem Detektieren einer Unregelmäßigkeit Stabilisierungsmaßnahmen einleitet, und nach dem Stabilisieren in einen störungssicheren Modus übergeht.

Die DE 10 2010 061897 A1 beschreibt ein Ansteuerverfahren und eine Ansteuervorrichtung für eine elektrische Maschine. Die Ansteuerung von Leistungslektronik zur Abgabe eines Anlaufdrehmoment erfolgt derart, dass Leistungsschalter der Leistungselektronik gleichmäßig belastet werden.

Die DE 10 2012 218612 A1 beschreibt eine Motorsteuerung und ein Verfahren zum feldorientierten Regeln eines Elektromotors.

Offenbarung der Erfindung

Die vorliegende Erfindung offenbart eine Vorrichtung mit den Merkmalen des Patentanspruchs 1 und ein Verfahren mit den Merkmalen des Patentanspruchs 8.

Dementsprechend ist eine Vorrichtung zum Steuern einer elektrischen Maschine vorgesehen, mit: einer Bereitstellungseinrichtung, welche dazu ausgelegt ist, einen Soll-Drehmomentswert für ein durch die elektrische Maschine auszuübendes Drehmoment bereitzustellen, d.h. anzugeben, welchen Wert das durch die elektrische Maschine auszuübende Drehmoment haben soll; einer Überwachungseinrichtung, welche dazu ausgelegt ist, ein Fehlersignal zu ermitteln, welches einen Fehlerzustand der elektrischen Maschine, insbesondere einer Leistungselektronik der elektrischen Maschine, indiziert; einer Ermittlungseinrichtung, welche dazu ausgelegt ist, einen aktuellen Rotorwinkelwert der elektrischen Maschine zu ermitteln; einer Recheneinrichtung, welche dazu ausgelegt ist, basierend auf dem bereitgestellten Soll-Drehmomentswert, dem ermittelten Fehlersignal und dem ermittelten aktuellen Rotorwinkelwert mindestens einen Fehlerzustand-Betriebspunkt zu bestimmen, bevorzugt eine Fehlerzustand-Betriebspunkte-Trajektorie; und einer Steuereinrichtung, welche dazu ausgelegt ist, einen Betriebspunkt, an welchem die elektrische Maschine betrieben wird, von einem Normalzustand-Betriebspunkt hin zu dem bestimmten Fehlerzustand-Betriebspunkt zu verschieben, insbesondere entlang der Fehlerzustand-Betriebspunkte-Trajektorie. Der Fehlerzustand-Betriebspunkt kann vorteilhaft den Soll-Drehmomentswert aufweisen.

Unter einer elektrischen Maschine ist insbesondere eine elektrische Maschine mit einem Rotor zu verstehen, welcher relativ zu einem Stator der elektrischen Maschine rotiert, wodurch entweder elektrischer Strom erzeugt wird (Generatorbetrieb) oder ein Drehmoment erzeugt wird (Motorbetrieb). Der Soll-Drehmomentswert kann beispielsweise auf einer Nutzereingabe (z.B. einem Niederdrücken eines Pedals durch einen Fahrer eines Fahrzeugs mit der elektrischen Maschine als Antrieb) basieren. Unter einer Fehlerzustand-Betriebspunkte-Trajektorie ist eine Trajektorie zu verstehen, welche in dem Fehlerzustand nach und nach von dem Betriebspunkt der elektrischen Maschine durch entsprechendes Steuern durchfahren werden soll. Die Fehlerzustand-Betriebspunkte-Trajektorie kann alle bestimmten Fehlerzustand-Betriebspunkte sowie den Normalzustand-Betriebspunkt umfassen.

Weiterhin ist ein Verfahren vorgesehen mit den Schritten: Bereitstellen eines Soll-Drehmomentswerts für ein durch eine elektrische Maschine auszuübendes Drehmoment; Ermitteln eines Fehlersignals, welches einen Fehlerzustand der elektrischen Maschine, insbesondere einer Leistungselektronik der elektrischen Maschine, indiziert; Ermitteln eines aktuellen Rotorwinkelwerts der elektrischen Maschine; Bestimmen, basierend auf dem bereitgestellten Soll-Drehmomentswert, dem ermittelten Fehlersignal und dem ermittelten aktuellen Rotorwinkelwert, mindestens eines Fehlerzustand-Betriebspunkts, bevorzugt einer Fehlerzustand-Betriebspunkte-Trajektorie; und Verschieben oder Versetzen eines Betriebspunkts, an welchem die elektrische Maschine betrieben wird, von einem Normalzustand-Betriebspunkt hin zu dem bestimmten Fehlerzustand-Betriebspunkt, bevorzugt entlang der bestimmten Fehlerzustand-Betriebspunkte-Trajektorie.

Vorteile der Erfindung

Die vorliegende Erfindung ermöglicht eine dynamische Erweiterung des Betriebsbereichs einer elektrischen Maschine. Der Einfluss eines Fehlers, insbesondere in der Leistungselektronik, kann in seiner Auswirkung auf das Drehmoment der Maschine kompensiert, das heißt verringert oder sogar eliminiert werden. Die erfindungsgemäße Vorrichtung erfordert keine oder nur besonders geringe bauliche Änderungen an bereits bestehenden Synchronmaschinen und ist daher besonders vielseitig anwendbar.

Die erfindungsgemäße Vorrichtung bzw. das erfindungsgemäße Verfahren sind besonders geeignet für Synchronmaschinen, insbesondere für anisotrope Synchronmaschinen mit einem Reluktanzanteil. Dies schließt unter anderem permanent erregte Synchronmaschinen (PSM), elektrisch erregte Synchronmaschinen (ESM), Synchronreluktanzmaschinen (SynRM) sowie Transversal- und Axialflussmaschinen (TFM und AFM) ein. Weiterhin können die beschriebenen Varianten und Modifikationen auch für Asynchronmaschinen angewendet oder angepasst werden.

Die erfindungsgemäße Vorrichtung kann insbesondere Teil eines Traktionsantriebs für ein Elektro- oder ein Hybridfahrzeug, eines elektrischen Stellantriebs und/oder eines Industrieantriebs sein.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist der Normalzustand-Betriebspunkt an einem ersten Zweig einer Stromverhältnisfunktion angeordnet, welche von einem zweiten Zweig der Stromverhältnisfunktion getrennt ist, beispielsweise durch eine senkrechte Asymptote. Die Stromverhältnisfunktion stellt ein Verhältnis eines elektrischen Stroms, iq, in q-Richtung der elektrischen Maschine zu einem elektrischen Strom, id, in d-Richtung der elektrischen Maschine dar. Die q-Richtung und die d-Richtung stellen Koordinatenrichtungen dar, welche relativ zu einem Rotor der elektrischen Maschine oder einer magnetischen Rotorflussverkettung der elektrischen Maschine fest angeordnet sind. Die Begriffe d-Richtung und q-Richtung sind geläufige Begriffe im Rahmen der sogenannten d/q-Transformation, welche auch als dq-, dq0- oder als Park-Transformation bezeichnet wird und welche dazu dient, dreiphasige Größen wie etwa bei einer Drehstrommaschine mit den Achsen a, b, c in ein zweiachsiges Koordinatensystem mit den Achsen d und q zu überführen.

Alle Punkte jedes einzelnen Zweigs der Stromverhältnisfunktion weisen denselben Drehmomentswert auf. Bevorzugt weist der erste Zweig der Stromverhältnisfunktion den Soll-Drehmomentswert auf. Der zweite Zweig der Stromverhältnisfunktion kann denselben Drehmomentswert wie der erste Zweig aufweisen, beispielsweise ebenfalls den Soll-Drehmomentswert. Die Stromverhältnisfunktion kann gerade dadurch definiert sein, dass alle ihre Punkte denselben Drehmomentswert aufweisen. Der zweite Zweig der Stromverhältnisfunktion kann aber auch einen anderen Drehmomentswert aufweisen, bevorzugt einen größeren Drehmomentswert als den Soll-Drehmomentswert.

Darunter, dass ein Punkt der Stromverhältnisfunktion einen Drehmomentswert aufweist, soll verstanden werden, dass bei Ansteuern der elektrischen Maschine mit einem elektrischen Strom iq in q-Richtung und einem elektrischen Strom id in d-Richtung der elektrischen Maschine gemäß der Stromverhältnisfunktion die elektrische Maschine ein Drehmoment mit dem entsprechenden Drehmomentswert bereitstellt.

Die bevorzugt erzeugte und in dem Fehlerzustand durch den Betriebspunkt durchfahrene Fehlerzustand-Betriebspunkte-Trajektorie ist vorteilhaft teilweise auf dem ersten Zweig und teilweise auf dem zweiten Zweig der Stromverhältnisfunktion angeordnet. Der bestimmte Fehlerzustand-Betriebspunkt weist vorteilhaft einen negativen iq-Wert auf. Die bevorzugt erzeugte und durch den Betriebspunkt durchfahrene Fehlerzustand-Betriebspunkte-Trajektorie weist vorteilhaft sowohl positive wie auch negative iq-Werte auf. Somit kann gewährleistet sein, dass für jeden aktuellen Rotorwinkelwert ein Betriebspunkt auf der Fehlerzustand-Betriebspunkte-Trajektorie ansteuerbar ist.

Gemäß einer weiteren bevorzugten Weiterbildung ist die Recheneinrichtung dazu ausgelegt, den Fehlerzustand-Betriebspunkt in Abhängigkeit von dem ermittelten Fehlersignal und dem ermittelten Rotorwinkelwert auf dem ersten Zweig der Stromverhältnisfunktion zu bestimmen. Mit anderen Worten kann der Betriebspunkt der elektrischen Maschine in Abhängigkeit von den genannten Größen entlang des ersten Zweigs der Stromverhältnisfunktion verschoben werden, wodurch das von der elektrischen Maschine bereitgestellte Drehmoment gleich bleibt. Somit kann beispielsweise vermieden werden, dass durch einen Fehler in dem Fehlerzustand, wegen dem der Normalzustand-Betriebspunkt nicht ansteuerbar ist, das Soll-Drehmoment nicht bereitgestellt werden kann.

Gemäß einer weiteren bevorzugten Weiterbildung ist die Recheneinrichtung dazu ausgelegt, den Fehlerzustand-Betriebspunkt in Abhängigkeit von dem ermittelten Fehlersignal und dem ermittelten aktuellen Rotorwinkelwert auf den zweiten Zweig der Stromverhältnisfunktion zu bestimmen. Somit kann auch dann ein gewünschtes Drehmoment durch die elektrische Maschine bereitgestellt werden, wenn der gesamte erste Zweig aufgrund des Fehlerzustands nicht ansteuerbar ist. Ein- und dieselbe erfindungsgemäße Vorrichtung kann dazu ausgelegt sein, den Fehlerzustand-Betriebspunkt je nach dem jeweiligen ermittelten Fehlersignal auf dem ersten oder auf dem zweiten Zweig der Stromverhältnisfunktion zu bestimmen.

Gemäß einer weiteren bevorzugten Weiterbildung ist die Steuereinrichtung dazu ausgelegt, eine Transformation von ersten Koordinatenwerten in der d-Richtung und der q-Richtung in zweite Koordinatenwerte in a/b/c-Koordinaten, welche Klemmgrößen indizieren, in Abhängigkeit von dem ermittelten Fehlersignal anzupassen. In den sogenannten a/b/c-Koordinaten werden häufig Klemmenspannungen angegeben. Somit kann ein Verfälschen der bereitgestellten Klemmenspannungen aufgrund des Fehlerzustands der elektrischen Maschine vermieden werden.

Gemäß einer weiteren bevorzugten Weiterbildung ist die Recheneinrichtung dazu ausgelegt, den Fehlerzustand-Betriebspunkt so zu bestimmen, dass dieser einen Fehlerzustand-Drehmomentswert aufweist, welcher von dem Soll-Drehmomentswert verschieden ist. Bevorzugt ist der Fehlerzustand-Drehmomentswert größer als der Soll-Drehmomentswert oder größer gleich dem Soll-Drehmomentswert. Somit können etwaige, durch den Fehlerzustand verursachte, Verringerungen des durch die elektrische Maschine im zeitlichen Mittel bereitgestellten Drehmoments, d.h. des durch die elektrische Maschine im Mittel erzeugten Ist-Drehmoments, verringert oder kompensiert werden.

Gemäß einer weiteren bevorzugten Weiterbildung umfasst die erfindungsgemäße Vorrichtung die zu steuernde elektrische Maschine.

Gemäß einer bevorzugten Weiterbildung des erfindungsgemäßen Verfahrens wird der Fehlerzustand-Betriebspunkt in Abhängigkeit von dem ermittelten Fehlersignal und dem ermittelten aktuellen Rotorwinkelwert auf dem ersten Zweig der Stromverhältnisfunktion und/oder auf dem zweiten Zweig der Stromverhältnisfunktion bestimmt, wobei die vorangehenden Definitionen der Stromverhältnisfunktion und des ersten und des zweiten Zweigs der Stromverhältnisfunktion gelten.

Gemäß einer weiteren bevorzugten Weiterbildung wird der Fehlerzustand-Betriebspunkt so bestimmt, dass dieser einen Fehlerzustand-Drehmomentswert aufweist, welcher von dem Soll-Drehmomentswert verschieden ist, insbesondere größer als der Soll-Drehmomentswert oder größer gleich dem Soll-Drehmomentswert ist.

Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:

| Fig. 1 | ein schematisches Blockschaltbild einer Vorrichtung zum Steuern einer elektrischen Maschine gemäß einer Ausführungsform der vorliegenden Erfindung; |
| --- | --- |
| Fig. 2, Fig. 3a bis Fig. 3f, Fig. 4a und Fig. 4f | schematische Graphen zum Erläutern der Funktionsweise der Vorrichtung aus Fig. 1; und |
| Fig. 5 | ein schematisches Flussdiagramm zum Erläutern eines Verfahrens zum Steuern einer elektrischen Maschine gemäß einer weiteren Ausführungsform der vorliegenden Erfindung. |

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

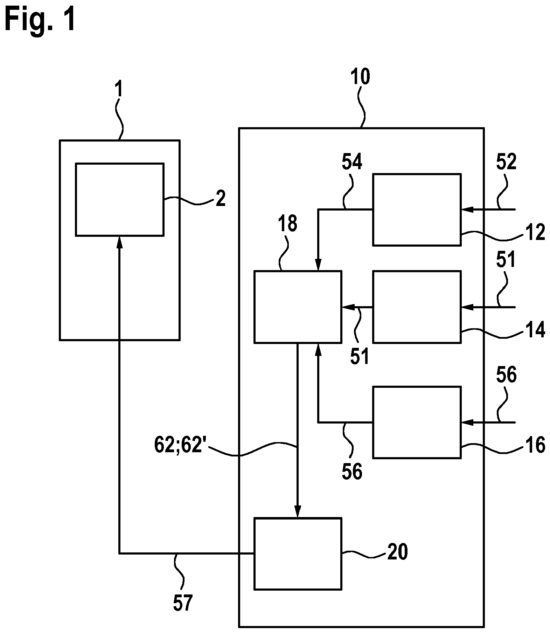

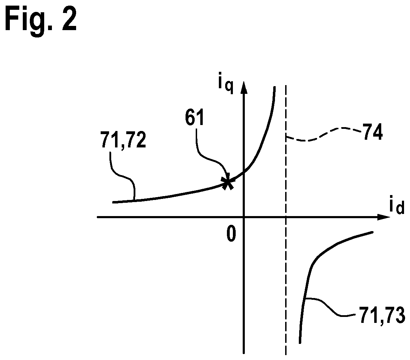

Fig. 1 zeigt ein schematisches Blockschaltbild einer Vorrichtung 10 zum Steuern einer elektrischen Maschine 1 gemäß einer Ausführungsform der vorliegenden Erfindung. Bei der Beschreibung der Vorrichtung 10 wird auch auf die nachfolgenden Figuren 2, 3a bis 3f, 4a und 4b verwiesen. Obgleich häufig exemplarisch der Fall beschrieben ist, dass die elektrische Maschine 1 in einem Fahrzeug angeordnet ist, als dessen Generator und/oder Motor sie fungieren kann, soll doch verstanden werden, dass die elektrische Maschine 1 auch außerhalb eines Fahrzeugs verwendet werden kann. Die Vorrichtung 10 ist bevorzugt zum Steuern einer Synchronmaschine mit Reluktanzanteil als elektrische Maschine 1 ausgebildet, kann aber auch für beliebige andere elektrische Maschinen 1 verwendet werden.

Die Vorrichtung 10 umfasst eine Bereitstellungseinrichtung 12, welche dazu ausgelegt ist, einen Soll-Drehmomentswert 54 für ein durch die elektrische Maschine 1 auszuübendes Drehmoment bereitzustellen. Die Bereitstellungseinrichtung 12 kann beispielsweise eine Schnittstelle sein, über welche ein extern vorgegebener Soll-Drehmomentswert 52 empfangbar und als Soll-Drehmomentswert 54 für die elektrische Maschine 1 bereitstellbar ist. Der extern vorgegebene Soll-Drehmomentswert 52 kann beispielsweise durch eine Fahrzeugsteuerung eines Fahrzeugs, als dessen Antrieb und/oder Generator die elektrische Maschine 1 fungiert, bereitgestellt werden. Der extern vorgegebene Soll-Drehmomentswert 52 kann beispielsweise auf einer Eingabe des Fahrers basieren, etwa durch Drücken eines Pedals oder Bewegen eines Hebels. Die Bereitstellungseinrichtung 12 kann aber auch dazu ausgelegt sein, den Soll-Drehmomentswert 54 basierend auf internen, insbesondere fahrzeuginternen, und/oder weiteren externen, insbesondere fahrzeugexternen, Signalen zu berechnen und das Ergebnis der Berechnung bereitzustellen.

Die Vorrichtung 10 umfasst weiterhin eine Überwachungseinrichtung 14, welche dazu ausgelegt ist, ein Fehlersignal 51 zu ermitteln. Das Fehlersignal 51 kann durch die Überwachungseinrichtung 14 direkt erfasst werden. Alternativ oder zusätzlich kann das Fehlersignal 51 durch die Überwachungseinrichtung 14 auch anhand anderer Messwerte beobachtet oder geschätzt werden, d.h. indirekt durch z.B. ein Diagnoseverfahren ermittelt werden.

Das Fehlersignal 51 indiziert einen Fehlzustand der elektrischen Maschine 1, insbesondere einen Fehlerzustand einer Leistungselektronik 2 der elektrischen Maschine 1. Das Fehlersignal 51 kann beispielsweise Informationen darüber umfassen, welcher Schalter der Leistungselektronik 2 unbrauchbar, beispielsweise durchlegiert, ist. Das Fehlersignal 51 kann alternativ oder zusätzlich auch Informationen enthalten, welche Parameterwerte von Steuerparametern der elektrischen Maschine 1 aufgrund des Fehlerzustands, welchen das Fehlersignal 51 indiziert, nicht ansteuerbar sind. Insbesondere kann das Fehlersignal 51 Informationen darüber umfassen, ob der Normalzustand-Betriebspunkt 61 in der iq-id-Ebene der elektrischen Maschine 1 unter Berücksichtigung des Fehlerzustands der elektrischen Maschine 1 ansteuerbar ist. Das Fehlersignal 51 kann beispielsweise durch die elektrische Maschine 1, durch deren Leistungselektronik 2 und/oder durch eine Fahrzeugsteuerung des Fahrzeugs, in dem die elektrische Maschine 1 angeordnet ist, bereitgestellt werden.

Die Vorrichtung 10 umfasst außerdem eine Ermittlungseinrichtung 16, welche dazu ausgelegt ist, einen aktuellen Rotorwinkelwert 56 eines Rotorwinkels eines Rotors der elektrischen Maschine 1 zu ermitteln. Der Rotorwinkelwert 56 kann durch die Ermittlungseinrichtung 16 explizit gemessen werden. Alternativ oder zusätzlich kann der Rotorwinkelwert 56 auch anhand anderer Messgrößen unter Verwendung geeigneter Verfahren indirekt ermittelt werden. Insbesondere bei einer Steuerung der elektrischen Maschine 1, welche durch d- und q-Koordinaten beschrieben wird, ist es abhängig von dem aktuellen Rotorwinkelwert, welche Betriebspunkte ansteuerbar sind und welche nicht.

Fig. 2 zeigt einen schematischen Graphen zum Erläutern der Funktionsweise der Vorrichtung 10. Der Graph in Fig. 2 weist als Ordinate einen Stromwert iq für einen Strom in q-Richtung und als Abszissenachse einen Stromwert id in d-Richtung auf. In dem Graphen ist eine Stromverhältnisfunktion 71 eingezeichnet, welche einen ersten Zweig 72 und einen zweiten Zweig 73 aufweist, welche durch eine vertikale Asymptote 74 getrennt, das heißt disjunkt sind. Sowohl der erste Zweig 72 als auch der zweite Zweig 73 weisen das gleiche konstante Drehmoment, d.h. die gleichen Drehmomentswerte. Ein Normalzustand-Betriebspunkt 61 ist an dem ersten Zweig 72 angeordnet. Der erste Zweig 72 weist ausschließlich positive iq-Werte auf, während der zweite Zweig 73 ausschließlich negative iq-Werte aufweist. Bei dem Betrieb der Vorrichtung 10 wird, wie im Folgenden näher erläutert, bevorzugt der Normalzustand-Betriebspunkt 61 angefahren, da dieser üblicherweise zu besonders geringen Verlusten in der elektrischen Maschine 1 führt.

Die Vorrichtung 10 ist ausgebildet mit einer Recheneinrichtung 18, welche dazu ausgelegt ist, basierend auf dem bereitgestellten Soll-Drehmomentswert 54, dem ermittelten Fehlersignal 51 und dem ermittelten aktuellen Rotorwinkelwert 56 mindestens einen Fehlerzustand-Betriebspunkt 62; 62' zu bestimmen, bevorzugt eine Fehlerzustand-Betriebspunkte-Trajektorie 62, 62' in dem id-iq-Raum. Der Fehlerzustand-Betriebspunkt 62 kann beispielsweise ebenfalls den Soll-Drehmomentswert 54 aufweisen, das heißt, die an dem Fehlerzustand-Betriebspunkt 62; 62' betriebene elektrische Maschine 1 stellt bevorzugt ebenfalls ein Drehmoment mit dem Soll-Drehmoment 54 bereit. Das Fehlersignal 51 kann durch die Ermittlungseinrichtung 14 direkt an die Recheneinrichtung 18 übermittelt werden oder es kann ein auf dem Fehlersignal 51 basierendes Signal an die Recheneinrichtung 18 übermittelt werden.

Die Vorrichtung 10 umfasst eine Steuereinrichtung 20, welche dazu ausgelegt ist, den Betriebspunkt, an welchem die elektrische Maschine 1 betrieben wird, mittels eines Steuersignals 57 einzustellen. Weiterhin ist die Steuereinrichtung 20 dazu ausgelegt, den Betriebspunkt der elektrischen Maschine 1 mittels des Steuersignals 57 von dem Normalzustand-Betriebspunkt 61 hin zu dem bestimmten Fehlerzustand-Betriebspunkt 62; 62' zu verschieben oder, bevorzugt, entlang der bestimmten Fehlerzustand-Betriebspunkte-Trajektorie 62; 62' zu verschieben.

Im Folgenden werden mögliche Varianten und Beispiele für die Funktionsweise der Vorrichtung 10 erläutert.

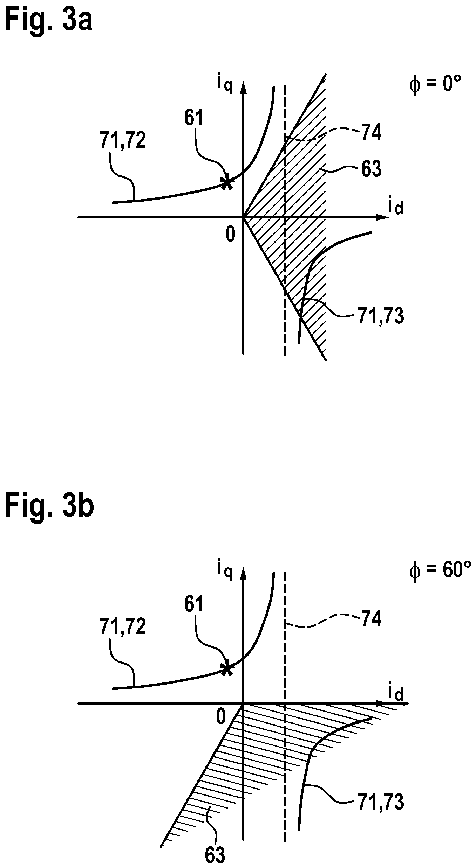

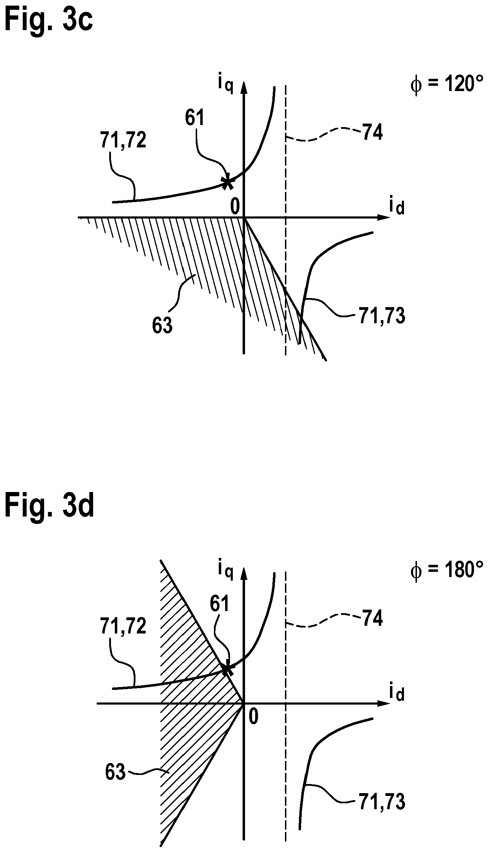

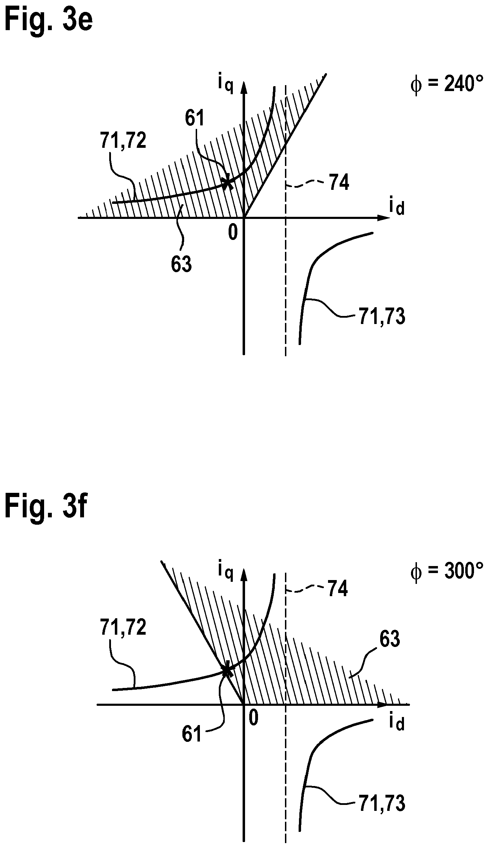

Fig. 3a bis 3f zeigen den Graphen aus Fig. 2 für den Fall, dass sich die elektrische Maschine 1 in dem Fehlerzustand befindet. Exemplarisch äußert sich der Fehlerzustand darin, dass zu jedem Zeitpunkt jeweils ein Bereich 63 der iq-id-Ebene für die elektrische Maschine 1 nicht ansteuerbar ist, das heißt, dass der Betriebspunkt, an welchem die elektrische Maschine 1 betrieben wird, nicht in den entsprechenden Bereich 63 gesetzt oder verschoben werden kann. Da die d- und q-Koordinaten rotorfest sind, verändert sich der jeweils nicht ansteuerbare Bereich mit der aktuellen Rotorlage, das heißt dem aktuellen Rotorwinkelwert 56. In den Fig. 3a bis 3f ist jeweils der für den Betriebspunkt der elektrischen Maschine 1 nicht zugängliche Bereich 63 eingezeichnet. Fig. 3a zeigt den Zustand bei dem Rotorwinkelwert 56 (mit dem Symbol $\phi$, gesprochen "phi") von $\phi = 0°$, Fig. 3b bei $\phi = 60°$, Fig. 3c bei $\phi = 120°$, Fig. 3d bei $\phi = 180°$, Fig. 3e bei $\phi = 240°$ und Fig. 3f bei $\phi = 300°$, wobei Fig. 3a wiederum $\phi = 360°$ entspricht. Im dargestellten Beispiel ist somit der Normalzustand-Betriebspunkt 61 für Rotorwinkelwerte 56 zwischen $\phi = 180°$ und $\phi = 300°$ nicht zugänglich. Für Rotorwinkelwerte 56 zwischen $\phi = 300°$ und $\phi = 180°$, beispielsweise $\phi = 60°$, ist der Normalzustand-Betriebspunkt 61 zugänglich, d.h. ansteuerbar.

Die Recheneinrichtung 18 der erfindungsgemäßen Vorrichtung 10 kann vorteilhaft so ausgelegt sein, dass der Betriebspunkt stets bei dem Normalzustand-Betriebspunkt 61 belassen wird, wenn dies möglich ist. Die Recheneinrichtung 18 ist somit in dem Beispiel gemäß den Figuren 3a bis 3f dazu ausgelegt, bei einem ermittelten Rotorwinkelwert 56 zwischen $\phi = 300°$ und $\phi = 180°$ den Betriebspunkt bei dem Normalzustand-Betriebspunkt 61 zu belassen.

Für diejenigen Rotorwinkelwerte 56, für welche der Normalzustand-Betriebspunkt 61 nicht zugänglich ist, wird der Betriebspunkt durch die Recheneinrichtung 18 von dem Normalzustand-Betriebspunkt 61 weg verschoben. Vorteilhaft wird der Betriebspunkt solange und so oft es geht, auf dem ersten Zweig 72 (mit positiven iq-Werten) belassen und wird erst dann auf den zweiten Zweig 73 (mit negativen iq-Werten) verschoben, wenn dies nicht mehr möglich ist.

Alternativ kann die Recheneinrichtung 18 aber auch so ausgelegt sein, dass der Betriebspunkt selbst zu einem Zeitpunkt zu dem Fehlerzustand-Betriebspunkt 62; 62 verschoben oder versetzt wird, an welchem Zeitpunkt der Normalzustand-Betriebspunkt 61 zugänglich ist, etwa wenn die Recheneinrichtung eine Fehlerzustand-Betriebspunkte-Trajektorie 62; 62' bestimmt hat, gemäß welcher dies insgesamt betrachtet vorteilhaft ist.

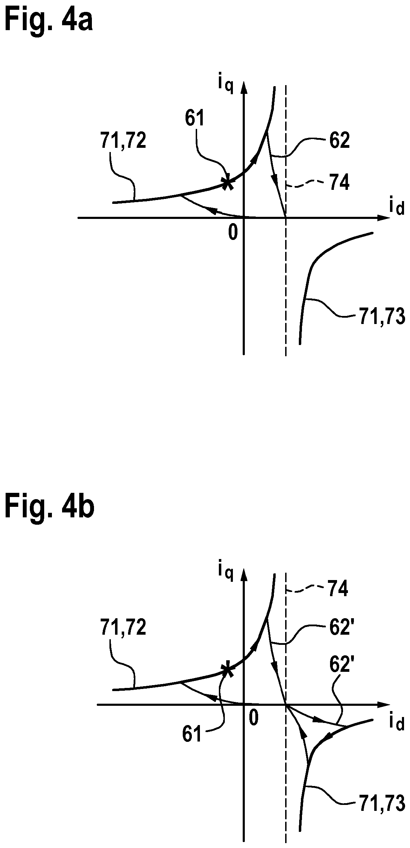

Fig. 4a und Fig. 4b zeigen mögliche Fehlerzustand-Betriebspunkte-Trajektorien 62, 62' des Betriebspunkts der elektrischen Maschine 1 aufgrund der Berechnung durch die Recheneinrichtung 18 basierend auf dem bereitgestellten Soll-Drehmomentswert 54, dem ermittelten Fehlersignal 51 und dem ermittelten aktuellen Rotorwinkelwert 56.

In Fig. 4a ist ein Fall dargestellt, in welchem der Betriebspunkt in Abhängigkeit von dem aktuellen Rotorwinkelwert 56 teilweise entlang des ersten Zweigs 72 verschoben wird, dann auf einer Trajektorie in der positiven iq-Halbebene bis zur id-Achse hinunter (z.B. bis an die Asymptote 74) bewegt und von dort wieder auf den ersten Zweig 72 bewegt wird, so dass sich eine geschlossene Fehlerzustand-Betriebspunkte-Trajektorie 62 bildet, deren einmalige Durchquerung genau einer Drehung des Rotorwinkels um 360° entspricht.

Fig. 4b zeigt eine alternative geschlossene Fehlerzustand-Betriebspunkte-Trajektorie 62', gemäß welcher der Betriebspunkt von der id-Achse, das heißt der Abszissenachse, zunächst auf den zweiten Zweig 73 verschoben wird, entlang des zweiten Zweigs 73 verschoben wird, von dort zurück (aus der negativen iq-Halbebene) wieder auf die id-Achse verschoben wird und von dort wiederum auf den ersten Zweig 72 verschoben wird. Eine erste Teil-Trajektorie in der positiven iq-Halbebene ist gleich der Fehlerzustand-Betriebspunkte-Trajektorie 62 in Fig. 4a ausgebildet und kann mit einer zweiten Teil-Trajektorie der Fehlerzustand-Betriebspunkte-Trajektorie 62' in der negativen iq-Halbebene an einem Punkt verbunden sein, welcher an der Asymptote 74 liegt.

Da in dem Beispiel nur der erste und der zweite Zweig 72, 73 den Soll-Drehmomentswert 54 aufweisen, ist die Recheneinrichtung 18 dazu ausgelegt, die Trajektorien zwischen den ersten und zweiten Zweigen 72, 73 so zu bestimmen, dass diese Bereiche zwischen den zwei ersten und zweiten Zweigen 72, 73 möglichst schnell durchfahren werden und dass es nicht zum Ausüben eines negativen Drehmoments durch die elektrische Maschine 1 kommt.

Zum Steuern der elektrischen Maschine 1 wird üblicherweise eine feldorientierte Regelung (FOR) verwendet, welche üblicherweise mit Variablen rechnet, welche in dem rotierenden Koordinatensystem beschrieben werden, das heißt mit den feldorientierten d/q-Koordinaten. Durch eine winkelabhängige Transformation kann zwischen den feldorientierten d/q-Koordinaten, statorfesten $\alpha/\beta$-Koordinaten (eines Stators der elektrischen Maschine 1) und Klemmengrößen (an Klemmen der elektrischen Maschine 1) in a/b/c-Koordinaten umgerechnet werden. Die Transformation von d/q-Koordinaten $u_d$, $u_q$ zu $\alpha/\beta$-Koordinaten $u_\alpha$, $u_\beta$ lautet:

$$\begin{bmatrix} u_\alpha \\ u_\beta \end{bmatrix} = M_{dq}^{\alpha\beta} \begin{bmatrix} u_d \\ u_q \end{bmatrix},$$

wobei

$$M_{dq}^{\alpha\beta} = \begin{bmatrix} \cos\phi & -\sin\phi \\ \sin\phi & \cos\phi \end{bmatrix}$$

ist und wobei das Symbol $\phi$ wieder den aktuellen Rotorwinkelwert 56 bezeichnet.

Die Transformation von den Klemmengrößen in a/b/c-Koordinaten $u_a$, $u_b$, $u_c$ in a/ß-Koordinaten $u_\alpha$, $u_\beta$ lautet:

$$\begin{bmatrix} u_\alpha \\ u_\beta \end{bmatrix} = M_{abc}^{\alpha\beta} \begin{bmatrix} u_a \\ u_b \\ u_c \end{bmatrix},$$

mit

$$M_{abc}^{\alpha\beta} = \frac{2}{3}\begin{bmatrix} 1 & -\frac{1}{2} & -\frac{1}{2} \\ 0 & \frac{\sqrt{3}}{2} & -\frac{\sqrt{3}}{2} \end{bmatrix}.$$

Im fehlerfreien Fall, das heißt im Normalzustand (im Gegensatz zu dem Fehlerzustand) können somit aus den durch die feldorientierte Regelung vorgegebenen Spannungen in d/q-Koordinaten Klemmenspannungen an den Klemmen der elektrischen Maschine 1 in a/b/c-Koordinaten direkt berechnet werden. Liegt jedoch ein Fehler vor, das heißt befindet sich die elektrische Maschine 1 im Fehlerzustand, kann die Transformation von d/q-Koordinaten in a/b/c-Koordinaten verfälscht werden.

Die Steuereinrichtung 20 kann dazu ausgelegt sein, die Transformation von d/q-Koordinaten auf a/b/c-Koordinaten unter Berücksichtigung des Fehlerzustands, das heißt unter Verwendung des ermittelten Fehlersignals 51, anzupassen. Hierdurch kann eine Verfälschung der Transformation aufgrund des Fehlerzustands verringert oder ganz vermieden werden. Dadurch kann sichergestellt werden, dass auch bei dem Fehlerzustand die weiterhin realisierbaren Spannungen korrekt in Klemmenspannung umgerechnet und gestellt werden können.

Vorteilhaft wird dazu der Einfluss des Fehlerzustands in der Transformation berücksichtigt und kompensiert. Dies wird dadurch ermöglicht, dass bei der Umrechnung der Spannungen von d/q-Koordinaten in a/b/c-Koordinaten ein Freiheitsgrad zur Verfügung steht, welcher genutzt werden kann, um durch gewisse Fehler hervorgerufene Störungen teilweise auszugleichen.

Insbesondere kann die Steuereinrichtung 20 dazu ausgelegt sein, von einen gewünschten Spannungsvektor

$U_{\alpha\beta} = \begin{bmatrix} u_\alpha \\ u_\beta \end{bmatrix}$ in $\alpha/\beta$-Koordinaten einen

Korrekturvektor $U_{\alpha\beta,Fehler}$ zum Erzeugen eines effektiven Spannungsvektors $\tilde{U}_{\alpha\beta}$ in den statorfesten $\alpha/\beta$-Koordinaten abzuziehen:

$$\tilde{U}_{\alpha\beta} = U_{\alpha\beta} - U_{\alpha\beta,Fehler}.$$

Der Korrekturvektor $U_{\alpha\beta,Fehler}$ ergibt sich insbesondere zu:

$$U_{\alpha\beta,Fehler} = \frac{V_{sup}}{2} M_{abc}^{\alpha\beta} f_i$$

Dabei ist $f_i$ ist dabei ein Fehlervektor, welcher basierend auf dem ermittelten Fehlersignal 51 durch die Steuereinrichtung 20 erzeugt wird und welcher den Fehlerzustand näher indiziert. Ohne Beschränkung der Allgemeinheit wird im Folgenden exemplarisch der Fall eines durchlegierten Schalters der Leistungselektronik 2 der elektrischen Maschine 1 betrachtet, welcher Teil einer B6-Brücke der Leistungselektronik 2 ist. Der Fehlervektor $f_i$ ist beispielsweise, je nachdem welcher von sechs Schaltern der B6-Brücke ausfällt:

$$f_i \in \left\{ \begin{bmatrix} 1 \\ 0 \\ 0 \end{bmatrix}, \begin{bmatrix} 0 \\ 1 \\ 0 \end{bmatrix}, \begin{bmatrix} 0 \\ 0 \\ 1 \end{bmatrix}, \begin{bmatrix} -1 \\ 0 \\ 0 \end{bmatrix}, \begin{bmatrix} 0 \\ -1 \\ 0 \end{bmatrix}, \begin{bmatrix} 0 \\ 0 \\ -1 \end{bmatrix} \right\}$$

Die korrigierte Spannung gemäß dem effektiven Spannungsvektor $\tilde{U}_{\alpha\beta}$ wird anschließend durch die Steuereinrichtung 20 in a/b/c-Koordinaten umgerechnet. Dazu kann eine angepasste Transformation von $\alpha/\beta$-Koordinaten auf a/b/c-Koordinaten verwendet werden. Die angepasste Transformation kann dazu ausgelegt sein, den zu stellenden effektiven Spannungsvektor $\tilde{U}_{\alpha\beta}$ auf die zwei noch verbleibenden Richtungen in a/b/c-Koordinaten zu verteilen.

Wie zuvor beschrieben, kann bei Vorliegen eines Fehlerzustands der Fall eintreten, dass der gewünschte Soll-Drehmomentswert 54 nur in einem eingeschränkten Bereich eingestellt werden kann. Dabei kann es vorkommen, dass sich im Mittel ein reduziertes Drehmoment im Vergleich zu dem Soll-Drehmomentswert 54 ergibt. Dies kann beispielsweise dadurch begründet sein, dass der Betriebspunkt der elektrischen Maschine 1 auf der Fehlerzustand-Betriebspunkte-Trajektorie 62; 62' zwischen dem ersten Zweig 72 und dem zweiten Zweig 73, welche jeweils den Soll-Drehmomentswert 54 aufweisen, bewegt wird, wobei ein Abschnitt der Fehlerzustand-Betriebspunkte-Trajektorie 62; 62' zwischen dem ersten und dem zweiten Zweig 72, 73 ein verringertes Drehmoment aufweisen kann.

Die Steuereinrichtung 20 kann dazu ausgelegt sein, basierend auf dem ermittelten Fehlersignal 51 und dem bereitgestellten Soll-Drehmomentswert 54 den Betriebspunkt der elektrischen Maschine 1 so zu verschieben, dass dieser zumindest teilweise größere Drehmomentswerte als den durch die Bereitstellungseinrichtung 12 bereitgestellten Soll-Drehmomentswert 54 aufweist. Dadurch kann sichergestellt werden, dass im Mittelwert das gewünschte Soll-Drehmoment 54 durch die elektrische Maschine 1 bereitgestellt wird.

Die Vorrichtung 10 kann weiterhin Anti-Windup-Strukturen aufweisen. Anti-Windup-Algorithmen mindern Auswirkungen von Stellgrößenbeschränkungen auf Regelkreise. Eine klassische Variante für PID-Regler besteht beispielsweise darin, die Integration eines Regelfehlers anzuhalten, sobald Stellgrößenbeschränkungen verletzt werden. Fehlerzustände in der Leistungselektronik 2 der elektrischen Maschine 1, beispielsweise ein durchlegierter Schalter, können als Stellgrößenbeschränkungen interpretiert werden, gemäß denen gewisse Spannungen an den Klemmen der elektrischen Maschine 1 oder der Leistungselektronik 2 nicht mehr eingestellt werden können. Diese Stellgrößenbeschränkungen können entweder explizit in einer Stromregelung berücksichtigt werden, beispielsweise wie vorangehend beschrieben, und/oder durch eine geeignete Anti-Windup-Zusatzfunktion in ihren Auswirkungen abgemildert werden. Beispielsweise kann das sogenannte Model-Reference-Anti-Windup-Verfahren verwendet werden.

Alternativ oder zusätzlich können die vorstehend definierten Stellgrößenbeschränkungen für die Verwendung gewisser Regelungsverfahren explizit berücksichtigt werden. Diese sind häufig vorteilhaft besonders ressourcensparend implementierbar. Geeignete Regelungsverfahren sind beispielsweise NIMC (Non-linear Internal Model Control) oder modellprädiktive Regler (MPC, Model Predictive Control).

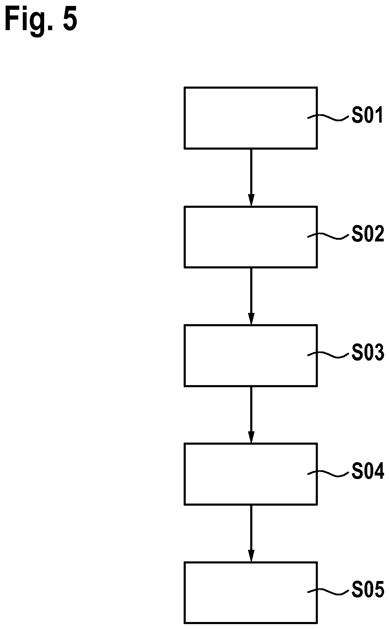

Fig. 5 zeigt ein schematisches Flussdiagramm zum Erläutern eines Verfahrens zum Steuern einer elektrischen Maschine 1 gemäß einer weiteren Ausführungsform der vorliegenden Erfindung. Das Verfahren gemäß Fig. 5 ist insbesondere mittels der erfindungsgemäßen Vorrichtung 10 durchführbar und ist gemäß allen in Bezug auf die Vorrichtung 10 beschriebenen Modifikationen und Weiterbildungen anpassbar und umgekehrt.

In einem Schritt S01 wird ein Soll-Drehmomentswert 54 für ein durch die elektrische Maschine 1 auszuübendes Drehmoment bereitgestellt, etwa durch die Bereitstellungseinrichtung 12 der Vorrichtung 10. In einem Schritt S02 wird ein Fehlersignal 51 ermittelt, welches einen Fehlerzustand der elektrischen Maschine 1 indiziert, etwa durch die Überwachungseinrichtung 14 der Vorrichtung 10. Das Fehlersignal 51 kann insbesondere bereitgestellt werden wie im Vorangehenden in Bezug auf die Vorrichtung 10 beschrieben.

In einem Schritt S03 wird ein aktueller Rotorwinkelwert 56 der elektrischen Maschine 1 ermittelt, beispielsweise mittels der Ermittlungseinrichtung 16 der Vorrichtung 10. In einem Schritt S04 wird, basierend auf dem bereitgestellten Soll-Drehmomentswert 54, dem ermittelten Fehlersignal 51 und dem ermittelten aktuellen Rotorwinkelwert 56, ein Fehlerzustand-Betriebspunkt 62; 62' bestimmt, bevorzugt eine vollständige Fehlerzustand-Betriebspunkte-Trajektorie 62; 62' bestimmt. In einem Schritt S05 wird ein Betriebspunkt, an welchem die elektrische Maschine 1 betrieben wird, von einem Normalzustand-Betriebspunkt 61 hin zu dem bestimmten Fehlerzustand-Betriebspunkt 62; 62' hin verschoben oder versetzt, bevorzugt entlang der bestimmten Fehlerzustand-Betriebspunkte-Trajektorie 62; 62'.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Der Fehlerzustand-Betriebspunkt 62; 62' und/oder die Fehlerzustand-Betriebspunkte-Trajektorie 62; 62' kann zum Beispiel in Abhängigkeit von dem ermittelten Fehlersignal 61 und dem ermittelten aktuellen Rotorwinkelwert 56 auf einem ersten Zweig 72 einer Stromverhältnisfunktion 71 und/oder auf einem zweiten Zweig 73 der Stromverhältnisfunktion 71 bestimmt werden, wobei die vorangehenden Definitionen der Stromverhältnisfunktion 71 und des ersten und des zweiten Zweigs 72, 73 der Stromverhältnisfunktion 71 gelten können.

Der Fehlerzustand-Betriebspunkt kann auch so bestimmt werden, dass dieser einen Fehlerzustand-Drehmomentswert aufweist, welcher von dem Soll-Drehmomentswert 54 verschieden ist, insbesondere größer als der Soll-Drehmomentswert 54 oder größer gleich dem Soll-Drehmomentswert 54 ist. Insbesondere kann eine Fehlerzustand-Betriebspunkte-Trajektorie 62, 62' derart bestimmt werden, dass das entlang der Fehlerzustand-Betriebspunkte-Trajektorie 62; 62' durch die elektrische Maschine 1 bereitgestellte Drehmoment im zeitlichen Mittel den Soll-Drehmomentswert 54 aufweist.

**Patentansprüche**

**1.** Vorrichtung (10) zum Steuern einer elektrischen Maschine (1), mit:

einer Bereitstellungseinrichtung (12), welche dazu ausgelegt ist, einen Soll-Drehmomentswert (54) für ein durch die elektrische Maschine (1) auszuübendes Drehmoment bereitzustellen;

einer Überwachungseinrichtung (14), welche dazu ausgelegt ist, ein Fehlersignal (51) zu ermitteln, welches einen Fehlerzustand der elektrischen Maschine (1) indiziert;

einer Ermittlungseinrichtung (16), welche dazu ausgelegt ist, einen aktuellen Rotorwinkelwert (56) der elektrischen Maschine (1) zu ermitteln;

einer Recheneinrichtung (18), welche dazu ausgelegt ist, basierend auf dem bereitgestellten Soll-Drehmomentswert (54), dem ermittelten Fehlersignal (51) und dem ermittelten aktuellen Rotorwinkelwert (56) mindestens einen Fehlerzustand-Betriebspunkt (62; 62') und eine Fehlerzustand-Betriebspunkte-Trajektorie zu bestimmen; und

einer Steuereinrichtung (20), welche dazu ausgelegt ist, einen Betriebspunkt, an welchem die elektrische Maschine (1) betrieben wird, von einem Normalzustand-Betriebspunkt (61) hin zu dem bestimmten Fehlerzustand-Betriebspunkt (62; 62') entlang der Fehlerzustand-Betriebspunkte-Trajektorie zu verschieben.

2. Vorrichtung (10) nach Anspruch 1,

wobei der Normalzustand-Betriebspunkt (61) an einem ersten Zweig (72) einer Stromverhältnisfunktion (71) angeordnet ist, welcher von einem zweiten Zweig (73) der Stromverhältnisfunktion (71) getrennt ist;

wobei die Stromverhältnisfunktion (71) ein Verhältnis eines elektrischen Stroms, iq, in q-Richtung der elektrischen Maschine (1) zu einem elektrischen Strom, id, in d-Richtung der elektrischen Maschine (1) darstellt;

wobei die q-Richtung und die d-Richtung Koordinatenrichtungen darstellen, welche relativ zu einem Rotor der elektrischen Maschine (1) fest angeordnet sind;

wobei alle Punkte jedes Zweigs (72, 73) der Stromverhältnisfunktion (71) denselben Drehmomentswert aufweisen.

3. Vorrichtung (10) nach Anspruch 2,
wobei die Recheneinrichtung (18) dazu ausgelegt ist, den Fehlerzustand-Betriebspunkt (62; 62') in Abhängigkeit von dem ermittelten Fehlersignal (51) und dem ermittelten aktuellen Rotorwinkelwert (56) auf dem ersten Zweig der Stromverhältnisfunktion (71) zu bestimmen.

4. Vorrichtung (10) nach Anspruch 2 oder 3,
wobei die Recheneinrichtung (18; 118) dazu ausgelegt ist, den mindestens einen Fehlerzustand-Betriebspunkt (62; 62') in Abhängigkeit von dem ermittelten Fehlersignal (51) und dem ermittelten aktuellen Rotorwinkelwert (56) auf dem zweiten Zweig (73) der Stromverhältnisfunktion (71) zu bestimmen.

5. Vorrichtung (10) nach einem der Ansprüche 1 bis 4,
wobei die Steuereinrichtung (20) dazu ausgelegt ist, eine Transformation von ersten Koordinatenwerten in der d-Richtung und der q-Richtung in zweite Koordinatenwerte in a-b-c-Koordinaten, welche Klemmgrößen indizieren, in Abhängigkeit von dem ermittelten Fehlersignal (51) anzupassen.

6. Vorrichtung (10) nach einem der Ansprüche 1 bis 5,
wobei die Recheneinrichtung (18) dazu ausgelegt ist, den Fehlerzustand-Betriebspunkt (62; 62') so zu bestimmen, dass dieser einen Fehlerzustand-Drehmomentswert aufweist, welcher von dem Soll-Drehmomentswert (54) verschieden ist.

7. Vorrichtung (10) nach einem der Ansprüche 1 bis 6,
wobei die Vorrichtung (10) die zu steuernde elektrische Maschine (1) umfasst.

8. Verfahren zum Steuern einer elektrischen Maschine (1), mit den Schritten:

Bereitstellen (S01) eines Soll-Drehmomentswerts (54) für ein durch die elektrische Maschine (1) auszuübendes Drehmoment;

Ermitteln (S02) eines Fehlersignals (51), welches einen Fehlerzustand der elektrischen Maschine (1) indiziert;

Ermitteln (S03) eines aktuellen Rotorwinkelwerts (56) der elektrischen Maschine (1);

Bestimmen (S04), basierend auf dem bereitgestellten Soll-Drehmomentswert (54), dem ermittelten Fehlersignal (51) und dem ermittelten aktuellen Rotorwinkelwert (56), eines Fehlerzustand-Betriebspunkts (62; 62') und einer Fehlerzustand-Betriebspunkte-Trajektorie;

**dadurch gekennzeichnet, dass** das Verfahren den nachfolgenden Schritt umfasst: Verschieben oder Versetzen(S05) eines Betriebspunkts, an welchem die elektrische Maschine (1) betrieben wird, von einem Normalzustand-Betriebspunkt (61) hin zu dem bestimmten Fehlerzustand-Betriebspunkt (62; 62') entlang der bestimmten Fehlerzustand-Betriebspunkte-Trajektorie.

9. Verfahren nach Anspruch 8,

wobei der Normalzustand-Betriebspunkt (61) an einem ersten Zweig (72) einer Stromverhältnisfunktion (71) angeordnet ist, welcher von einem zweiten Zweig (73) der Stromverhältnisfunktion (71) getrennt ist;
wobei die Stromverhältnisfunktion ein Verhältnis eines elektrischen Stroms, iq, in q-Richtung der elektrischen Maschine (1) zu einem elektrischen Strom, id, in d-Richtung der elektrischen Maschine (1) darstellt;
wobei die q-Richtung und die d-Richtung Koordinatenrichtungen darstellen, welche relativ zu einem Rotor der elektrischen Maschine (1) fest angeordnet sind; und
wobei der Fehlerzustand-Betriebspunkt (62) in Abhängigkeit von dem ermittelten Fehlersignal (51) und dem ermittelten aktuellen Rotorwinkelwert (56) auf dem ersten Zweig (72) der Stromverhältnisfunktion (71) und/oder auf dem zweiten Zweig (73) der Stromverhältnisfunktion (71) bestimmt wird.

10. Verfahren nach Anspruch 8 oder 9,
wobei der Fehlerzustand-Betriebspunkt (62; 62') so bestimmt wird, dass der Fehlerzustand-Betriebspunkt (62) einen Fehlerzustand-Drehmomentswert aufweist, welcher von dem Soll-Drehmomentswert (54) verschieden ist.

**Claims**

1. Device (10) for controlling an electric machine (1), with:

a provision apparatus (12) that is designed to provide a desired torque value (54) for a torque to be exerted by the electric machine (1);
a monitoring apparatus (14) that is designed to determine a fault signal (51) that indicates a fault state of the electric machine (1);
a determination apparatus (16) that is designed to determine a current rotor angle value (56) of the electric machine (1);
a computing apparatus (18) that is designed to determine at least one fault state operating point (62; 62') and a fault state operating point trajectory on the basis of the provided desired torque value (54), the determined fault signal (51) and the determined current rotor angle value (56); and
a control apparatus (20) that is designed to shift an operating point at which the electric machine (1) is operated from a normal state operating point (61) to the determined fault state operating point (62; 62') along the fault state operating point trajectory.

2. Device (10) according to Claim 1,

wherein the normal state operating point (61) is arranged on a first branch (72) of a current ratio function (71) that is separated from a second branch (73) of the current ratio function (71);
wherein the current ratio function (71) represents a ratio of an electric current, iq, in the q-direction of the electric machine (1) to an electric current, id, in the d-direction of the electric machine (1); wherein the q-direction and the d-direction represent coordinate directions that are arranged with a fixed relationship to a rotor of the electric machine (1);
wherein all points of each branch (72, 73) of the current ratio function (71) have the same torque value.

3. Device (10) according to Claim 2,
wherein the computing apparatus (18) is designed to determine the fault state operating point (62; 62') depending on the determined fault signal (51) and the determined current rotor angle value (56) on the first branch of the current ratio function (71).

4. Device (10) according to Claim 2 or 3,
wherein the computing apparatus (18; 118) is designed to determine the at least one fault state operating point (62; 62') depending on the determined fault signal (51) and the determined current rotor angle value (56) on the second branch (73) of the current ratio function (71).

**5.** Device (10) according to one of Claims 1 to 4,
wherein the control apparatus (20) is designed to adjust a transformation of first coordinate values in the d-direction and the q-direction into second coordinate values into a-b-c coordinates that indicate terminal magnitudes, depending on the determined fault signal (51) .

**6.** Device (10) according to one of Claims 1 to 5,
wherein the computing apparatus (18) is designed to determine the fault state operating point (62; 62') such that it exhibits a fault state torque value that differs from the desired torque value (54).

**7.** Device (10) according to one of Claims 1 to 6,
wherein the device (10) comprises the electric machine (1) to be controlled.

**8.** Method for controlling an electric machine (1) with the steps of:

providing (S01) a desired torque value (54) for a torque to be exerted by the electric machine (1);
determining (S02) a fault signal (51) that indicates a fault state of the electric machine (1);
determining (S03) a current rotor angle value (56) of the electric machine (1);
determining (S04) a fault state operating point (62; 62') and a fault state operating point trajectory on the basis of the provided desired torque value (54), the determined fault signal (51) and the determined current rotor angle value (56); **characterized in that** the method comprises the following step:
shifting or moving (S05) an operating point at which the electric machine (1) is operated from a normal state operating point (61) to the determined fault state operating point (62; 62') along the determined fault state operating point trajectory.

**9.** Method according to Claim 8,

wherein the normal state operating point (61) is arranged on a first branch (72) of a current ratio function (71) that is separated from a second branch (73) of the current ratio function (71);
wherein the current ratio function represents a ratio of an electric current, iq, in the q-direction of the electric machine (1) to an electric current, id, in the d-direction of the electric machine (1);
wherein the q-direction and the d-direction represent coordinate directions that are arranged with a fixed relationship to a rotor of the electric machine (1); and
wherein the fault state operating point (62) is determined on the first branch (72) of the current ratio function (71) and/or on the second branch (73) of the current ratio function (71) depending on the determined fault signal (51) and the determined current rotor angle value (56).

**10.** Method according to Claim 8 or 9,
wherein the fault state operating point (62; 62') is determined such that the fault state operating point (62) exhibits a fault state torque value that differs from the desired torque value (54).

## Revendications

**1.** Dispositif (10) permettant de commander une machine électrique (1), comprenant:

un moyen de fourniture (12) qui est conçu pour fournir une valeur de couple de consigne (54) pour un couple à exercer par la machine électrique (1);
un moyen de surveillance (14) qui est conçu pour établir un signal de défaut (51) qui indique un état de défaut de la machine électrique (1);
un moyen d'établissement (16) qui est conçu pour établir une valeur d'angle de rotor actuelle (56) de la machine électrique (1);
un moyen de calcul (18) qui est conçu pour déterminer sur la base de la valeur de couple de consigne fournie (54), du signal de défaut établi (51) et de la valeur d'angle de rotor actuelle établie (56) au moins un point de fonctionnement d'état de défaut (62; 62') et une trajectoire de points de fonctionnement d'état de défaut; et
un moyen de commande (20) qui est conçu pour déplacer un point de fonctionnement auquel fonctionne la machine électrique (1) d'un point de fonctionnement d'état normal (61) vers le point de fonctionnement d'état de défaut (62; 62') le long de la trajectoire de points de fonctionnement d'état de défaut.

**2.** Dispositif (10) selon la revendication 1,

dans lequel le point de fonctionnement d'état normal (61) est situé sur une première branche (72) d'une fonction de rapport de courant (71) qui est séparée d'une deuxième branche (73) de la fonction de rapport de courant (71) ; la fonction de rapport de courant (71) représentant un rapport entre un courant électrique, iq, dans la direction q de la machine électrique (1) et un courant électrique, id, dans la direction d de la machine électrique (1); la direction q et la direction d représentant des directions de coordonnées qui sont fixes par rapport à un rotor de la machine électrique (1);
tous les points de chaque branche (72, 73) de la fonction de rapport de courant (71) présentant la même valeur de couple.

**3.** Dispositif (10) selon la revendication 2, dans lequel le moyen de calcul (18) est conçu pour déterminer le point de fonctionnement d'état de défaut (62; 62') en fonction du signal de défaut établi (51) et de la valeur d'angle de rotor actuelle (56) sur la première branche de la fonction de rapport de courant (71).

**4.** Dispositif (10) selon la revendication 2 ou 3, dans lequel le moyen de calcul (18; 118) est conçu pour déterminer ledit au moins un point de fonctionnement d'état de défaut (62; 62') en fonction du signal de défaut établie (51) et de la valeur d'angle de rotor actuelle établie (56) sur la deuxième branche (73) de la fonction de rapport de courant (71).

**5.** Dispositif (10) selon l'une quelconque des revendications 1 à 4, dans lequel le moyen de commande (20) est conçu pour adapter en fonction du signal de défaut établi (51) une transformation des premières valeurs de coordonnées dans la direction d et la direction q en deuxièmes valeurs de coordonnées en coordonnées a-b-c qui indiquent des grandeurs de clampage.

**6.** Dispositif (10) selon l'une quelconque des revendications 1 à 5, dans lequel le moyen de calcul (18) est conçu pour déterminer le point de fonctionnement d'état de défaut (62; 62') de telle sorte que celui-ci présente une valeur de couple d'état de défaut qui est différente de la valeur de couple de consigne (54).

**7.** Dispositif (10) selon l'une quelconque des revendications 1 à 6, dans lequel le dispositif (10) comprend la machine électrique (1) à commander.

**8.** Procédé permettant de commander une machine électrique (1), comprenant les étapes consistant à:

fournir (S01) une valeur de couple de consigne (54) pour un couple à exercer par la machine électrique (1);
établir (S02) un signal de défaut (51) qui indique un état de défaut de la machine électrique (1);
établir (S03) une valeur d'angle de rotor actuelle (56) de la machine électrique (1);
déterminer (S04), sur la base de la valeur de couple de consigne fournie (54), du signal de défaut établi (51) et de la valeur d'angle de rotor actuelle établie (56), un point de fonctionnement d'état de défaut (62; 62') et une trajectoire de points de fonctionnement d'état de défaut;
**caractérisé en ce que** le procédé comprend l'étape suivante consistant à:
déplacer ou décaler (S05) un point de fonctionnement auquel fonctionne la machine électrique (1) d'un point de fonctionnement d'état normal (61) vers le point de fonctionnement d'état de défaut déterminé (62; 62') le long de la trajectoire de points de fonctionnement d'état de défaut déterminée.

**9.** Procédé selon la revendication 8,

dans lequel le point de fonctionnement d'état normal (61) est disposé sur une première branche (72) d'une fonction de rapport de courant (71) qui est séparée d'une deuxième branche (73) de la fonction de rapport de courant (71) ;
la fonction de rapport de courant représentant un rapport entre un courant électrique, iq, dans la direction q de la machine électrique (1) et un courant électrique, id, dans la direction d de la machine électrique (1);
la direction q et la direction d représentant des directions de coordonnées qui sont fixes par rapport à un rotor de la machine électrique (1); et
le point de fonctionnement d'état de défaut (62) étant déterminé en fonction du signal de défaut établi (51) et de la valeur d'angle de rotor actuelle établie (56) sur la première branche (72) de la fonction de rapport de courant (71) et/ou sur la deuxième branche (73) de la fonction de rapport de courant (71).

**10.** Procédé selon la revendication 8 ou 9, dans lequel le point de fonctionnement d'état de défaut (62; 62') est déterminé de telle sorte que le point de fonctionnement d'état de défaut (62) présente une valeur de couple d'état de défaut qui est différente de la valeur de couple de consigne (54).

# Fig. 1

# Fig. 2

# Fig. 3a

# Fig. 3b

# Fig. 3c

$\phi = 120°$

61
71,72
74
$i_q$
0
$i_d$
63
71,73

# Fig. 3d

$\phi = 180°$

61
71,72
74
$i_q$
0
$i_d$
63
71,73

# Fig. 3e

$\phi = 240°$

# Fig. 3f

$\phi = 300°$

# Fig. 4a

# Fig. 4b

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008042931 A1
- US 2015123581 A1
- DE 102010061897 A1
- DE 102012218612 A1